(19)

Europäisches
Patentamt
European
Patent Office
Office européen
des brevets

(11) **EP 2 063 580 B1**

(12) **EUROPEAN PATENT SPECIFICATION**

(45) Date of publication and mention
of the grant of the patent:
**20.07.2011 Bulletin 2011/29**

(51) Int Cl.:
***H04L 12/56*** *(2006.01)*

(21) Application number: **07121128.8**

(22) Date of filing: **20.11.2007**

(54) **Low complexity scheduler with generalized processor sharing GPS like scheduling performance**

Scheduler mit niedriger Komplexität mit Generalized Processor Sharing GPS-artiger Schedulerfunktion

Planificateur de faible complexité avec partage de processeur généralisé GPS comme une performance de programmation

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**27.05.2009 Bulletin 2009/22**

(73) Proprietor: **Alcatel Lucent
75007 Paris (FR)**

(72) Inventors:
• **Hellenthal, Wim
3851 LA, Ermelo (NL)**
• **Jennen, Jean
1273 BT, Huizen (NL)**

(74) Representative: **Schmidt, Werner Karl
Alcatel Lucent
Intellectual Property & Standards
70430 Stuttgart (DE)**

(56) References cited:
**US-A- 5 828 878     US-A1- 2007 165 647
US-B1- 6 646 986**

• **DENG PAN ET AL: "Credit based fair scheduling
for packet switched networks" INFOCOM 2005.
24TH ANNUAL JOINT CONFERENCE OF THE
IEEE COMPUTER AND COMMUNICATIONS
SOCIETIES. PROCEEDINGS IEEE MIAMI, FL, USA
13-17 MARCH 2005, PISCATAWAY, NJ, USA,
IEEE, 13 March 2005 (2005-03-13), pages 843-854,
XP010829184 ISBN: 0-7803-8968-9**

**Description**

This invention relates to scheduling algorithms for use in telecommunications networks equipment.

Use of different media services, especially content-intensive media services, is becoming popular among technology savvy consumers. Despite advances in computing and networking, transport of network traffic for many content-intensive media services generally depends upon real-time network performance. Typically, a data network is deployed to transmit network traffic associated with a variety of media services, such as interactive services involving interaction between at least two users. Examples of such interactive services include video and audio conferencing and voice-over-IP(VoIP).

However, an increasing number of interactive services, and other services, impose user demands on the data network usage for transportation of service traffic. These user demands, such as quality-of-service (QoS) requirements, may be expressed in terms of throughput and end-to-end delay. A data network generally comprises a plurality of network devices capable of connecting users across a network coverage area. Many popular data networks normally provide decentralized control, meaning that one or more packet scheduling mechanisms operating in the individual network devices possess certain characteristics to fulfill the QoS requirements of the network as a whole.

In general, a packet scheduling mechanism may resolve contentions over resources, such as bandwidth, in a manner that fairly allocates a resource without unnecessary end-to-end delay. More specifically, for fairness, a scheduler may provide some mechanism to isolate between multiple flows competing for the same output link. That is, each flow is given a fair share of the available bandwidth, even in the presence of misbehaving flows.

To provide relatively short delay in many interactive services, such as video and audio conferencing, a scheduler is expected to limit the total delay experienced by the end users. Since every router may be an element within an end-to-end service delivery chain, such routers are expected to use a scheduler with a low delay. In other words, the scheduler generally decides the order in which packets are sent on the output link and therefore determines the per flow queuing delay. With line rates increasing to 10 gigabit per second and above, a scheduler is expected to have relatively low complexity while being able to operate in very short time-frames, such as nanoseconds.

Fairness and low delay are normally measured using Generalized Processor Sharing (GPS) as a benchmark. The GPS based approach specifies a theoretical model where all backlogged packet flows are serviced simultaneously, e.g., using a fluid model in a weighted fashion where each weight determines a given minimum bandwidth for a corresponding flow. For example, so-called timestamp schedulers, including weighted fair queuing (WFQ) based schedulers, attempt to approximate the GPS model by calculating the start and finish times of packets according to the GPS model. The start and finish times are the times that a packet should have started, i.e. arrived at the scheduler, and finished service, i.e. left the scheduler, if served by a GPS scheduler.

Another timestamp scheduler, the so called Worst-case Fair Weighted Fair Queuing (WF$^2$Q), further approximates the theoretical GPS scheduler insofar, as it not only approximates the delay bound, as does WFQ, but also the fairness properties of GPS. It can be shown, that under certain circumstances WFQ can actually fleece some flows over others, i.e. the packets of certain flows can leave the scheduler largely ahead of time, as compared to GPS. This can create bursty traffic patterns, which can lead to congestion in a downstream network. It can further be shown, that the performance of the WF$^2$Q scheduler is almost identical, with a maximum difference of one max packet size, to the GPS scheduler and that it shares both the bounded-delay and fairness properties of the latter.

Furthermore, in order to schedule the packets in increasing order of their finish times, an approximation of the GPS model requires a significant number of computations, substantially increasing complexity of the GPS scheduler. Besides this increased computational complexity, the GPS scheduler has to sort packets according to their finish times which is a time consuming task. As a result, the GPS scheduler becomes infeasible for use within network devices that may operate in a high-speed, such as a gigabit range.

Other variations of timestamp scheduling algorithms that approximate the GPS model trade accuracy for lower complexity. However, application of such timestamp scheduling algorithms within high-speed network devices may be difficult for at least some of the reasons set forth with regard to the GPS scheduler. Accordingly, for some high-speed network devices, a type of round-robin scheduling mechanism may sometimes be used. Round-robin schedulers are frame-based schedulers that assign timeslots to flows in some sort of round-robin fashion. Such round-robin schedulers have a relatively low complexity, but, as a result of the round-robin based scheduling, tend to have poor delay bounds and output burstiness. Nonetheless, one variant of round-robin type of scheduler normally used within high-speed network devices, which is applied in routers because of their low complexity, is known as Deficit Round Robin (DRR) scheduler.

Within the gigabit speed range, use of many conventional schedulers is either not feasible due to their complexity or in view of undesired characteristics that may not be acceptable when compared with characteristics of a WFQ or a WF$^2$Q based scheduler, for example. For instance, a scheduling mechanism, such as a round-robin type scheduling mechanism with low complexity, may not provide desired delay bounds within network devices operating in the gigabit speed range, and generally may be difficult to implement due to an unacceptable level of output burstiness.

The US patent application US 2007/0121504 proposes a scheduler, which provides fairness and delay bound characteristics similar to that of a WFQ scheduler, while substantially reducing the complexity. The scheduler comprises scheduler logic that uses a credit counter per flow to keep track of the service difference received between two or more flows and selects the flow for service next that has the maximum credit value. It can be viewed as a low complexity variant of the WFQ scheduler.

Deng Pan et al.: "Credit based fair scheduling for packet switched networks", INFOCOM 2005, FL, USA 13-17 March 2005, pages 843-854 describes a fair scheduling algorithm with constant time complexity which adopts a credit/balance based policy.

The present invention proposes a weighted fair queuing scheduling method and apparatus with low calculation complexity and fairness/delay bound characteristics that can compete with the best timestamp schedulers currently known, i.e. the WF$^2$Q scheduler, The new scheduler will be referred to as the "Fair Share Balanced" (FSB) scheduler. The proposed type of scheduler is expected to be feasible to be implemented within network devices working at Gigabit speeds or above.

The present invention is specified in the independent claims. Preferred embodiments are outlined in the dependent claims.

The general concept of the scheduler can be described as follows:

For each incoming flow $i$ a scheduling credit ($C_i$) is assigned. Any parameter proportional to the elapsed time could be used to track the scheduling credit values $C_i$. E.g. it could be tracked by the outgoing packet sizes $L$ i.e. "available output rate" ($r$) * "time" ($t$), assuming that the elapsed time is the interval $(0,t]$. The credit value $C_i$ is reduced by the actually used up service, corrected by the weighted fraction of the available output rate, i.e. $W_i/w_i$, where $W_i$ is the total service received by flow i in a given time period $(0,t]$ and $w_i$ is the relative reserved bandwidth (often also referred to as the weight) of flow $i$.

The order of service for each flow is assigned according to the earliest finish times of the front end packets, whereas the front end packets are the packets at the front ends of the queues of the plurality of flows. However, at any given time, only incoming flows with a positive scheduling credit value ($C_i$), i.e. flows which are behind their requested service, are considered for scheduling. In other words, only flows which are behind schedule are considered for scheduling. All other flows have to wait until they reach again a positive credit ($C_i$) or until all other incoming flows have used up their credits as well, upon which new credit budgets are allocated to all flows.

It can be shown, that the FSB scheduler can be implemented in $O(1)$ complexity, i.e. that the amount of time (number of clock cycles) required for the calculations is constant and independent of the number of flows. The reason for this is that the scheduler is output driven, which means that adding additional incoming flows does not influence the amount of time that it takes to calculate the next flow that is entitled to send a packet. This latter time is actually constant, which results in the O(1) complexity. Consequently, the proposed scheduler has a largely decreased complexity with respect to the WF$^2$Q scheduler, which it approximates.

The invention is explained through its use in high speed telecommunications equipment. It should be noted that it can also be applied to other application fields, which require scheduling of competing players for a scarce resource, such as for example the scheduling of processing time on a computer system.

The features and advantages of the invention will become apparent from the description of preferred embodiments. The present invention is described in the following by referring to exemplary embodiments illustrated schematically in the accompanying figures and tables, wherein

Fig. 1 illustrates schematically the structure of a scheduler system, scheduling an output flow from packets of a plurality of incoming flows;
Fig. 2 illustrates in a flow chart the main steps of an embodiment of the FSB algorithm;
Table 1 illustrates in pseudo code the main steps of an embodiment of the FSB algorithm;
Fig. 3 shows an exemplary plurality of incoming flows F1 to F4 on a scheduler;
Fig. 4 shows the service order of the flows F1 to F4 subject to an FSB scheduler;
Fig. 5 illustrates the evolution of the credit values of the FSB algorithm, for the exemplary flows shown in Fig. 3;
Fig. 6 shows a simulation of the latency performance of the FSB scheduler compared with a Deficit Round Robin scheduler; and
Fig. 7 shows a simulation of the latency performance of the FSB scheduler compared with a Deficit Round Robin scheduler, in case of over-provisioning.

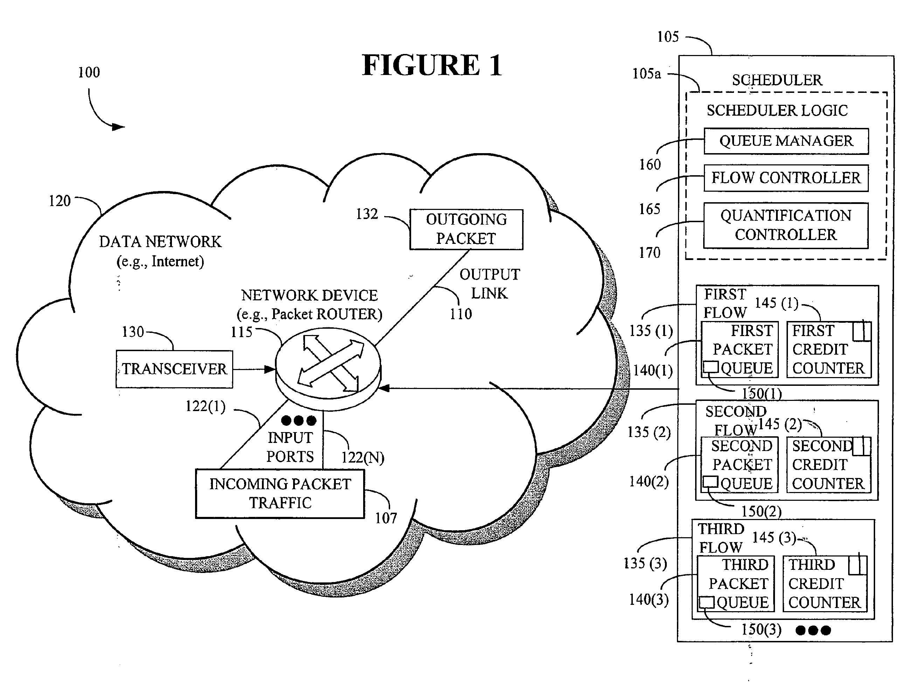

Referring to Figure 1, a communication system 100 is illustrated in accordance with an embodiment of the present invention to include a scheduler 105 for scheduling a flow 132 of outgoing packets from a plurality of flows 135 (1-N) of outgoing packets from incoming packet traffic 107 on an output link 110 of a network device 115 associated with a data network 120. In an embodiment, the network device 115, for example a packet router, may receive the incoming packet traffic 107 on a plurality of input ports 122 (1-N). The incoming packet traffic 107 may be communicated over the data network 120. For receiving and sending packets of the data network 120, the network device 115 may comprise transceivers 130.

Examples of the data network 120 include a packet-based network, such as an asynchronous transfer mode (ATM) network or an Internet Protocol (IP) network. An example of the IP network is the Internet. Of course, other data networks different than the ATM network or the IP network, in which scheduling of a flow of outgoing packet stream is desired, may employ the scheduler 105 to select a packet for service from a queue.

Examples of the outgoing packet 132 include any packet that may be communicated over the data network 120, such as an ATM packet or an IP packet. In other embodiments, a flow of outgoing packets with different data packets than ATM packets or IP packets may be scheduled for service in the network device 115.

The scheduler 105 comprises a scheduler logic 105a and a plurality of flows, illustrated in Fig. 1, by way of example, as first flow 135(1) to third flow 135(3). A packet queue 140 (1-3) and a credit counter 145 (1-3) are assigned to each flow. Each packet queue has a packet that has the front end position of the queue, referred to as the front end packet 150 (1-3) of the flow.

Consistent with an embodiment of the present invention, the scheduler logic 105a may comprise a queue manager 160, a flow controller 165, and a quantification controller 170. While the queue manager 160 may arrange the first, second, and third packet queues 140(1-3) into first-in first-out (FIFO) queues, on a per flow basis, the flow controller 165 may be responsible for identifying a flow that is up for serving. The packets arriving in the incoming packet traffic 107 at the input ports 122 (1-N) at the network device 115, may be stored in a respective queue that matches a corresponding flow identification (ID). The flow ID may be determined based on a classification according to a quality of service (QoS) indicated for each flow 135 of outgoing packets.

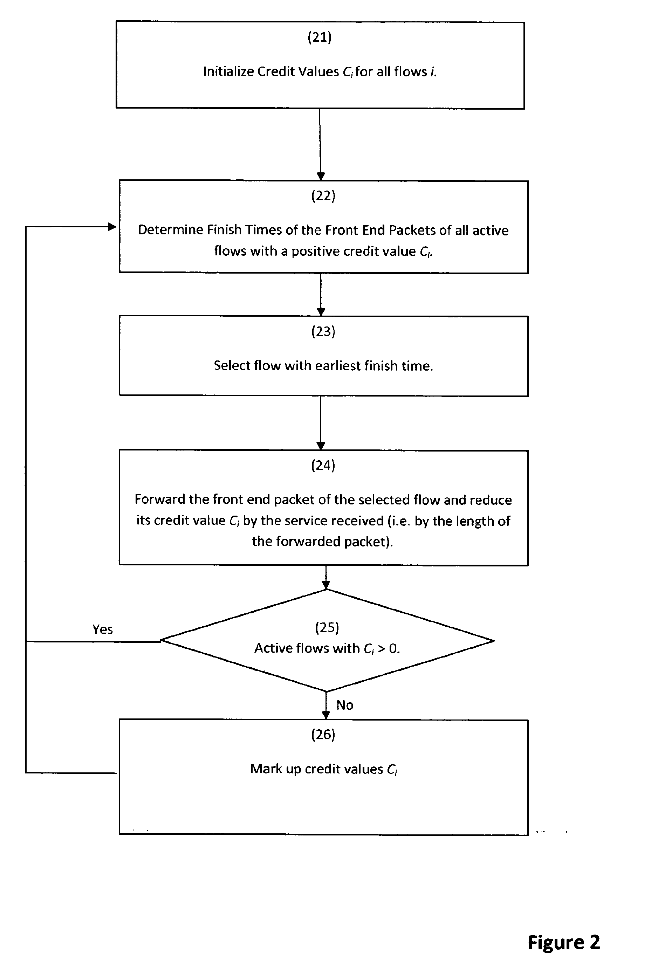

The scheduler logic 105a implements the FSB scheduling algorithm, which is outlined in Fig. 2 and Table 1.

Figure 2 shows a flow diagram according to an embodiment of the FSB algorithm. In an initial step 21, credit values $C_i$ are initialized for each flow of outgoing packets, referred to as i. In step 22 the finish times of the front end packets of the flows are determined for those flows that have a positive credit value $C_i$. Flows with a negative credit value are not considered for scheduling. In a next step 23 the front end packet with the earliest finish time is selected and forwarded to the output port in step 24. The credit value of the flow that has received the service, i.e. of the flow from which the forwarded front end packet originates, is reduced in step 24 by the length of the forwarded front end packet. If after the updating of the credit value, there are still flows with a positive credit value, the method continues with step 22, in order to determine the next packet to be forwarded. If, however, all credit values are zero or below, the credit values of all active flows are marked-up in step 26 by a predefined value, before the method proceeds with step 22.

In other words, the FSB scheduler aims at keeping the service $W_i$ received by every flow i within a given time period $(0, t]$ as close as possible to the assigned service rates. Such service rates can be defined by the value $w_i \cdot r \cdot t$, where $w_i \in (0,1]$ is the reserved relative bandwidth or weight. This value reflects the amount of service that a flow i is entitled to during a time period $(0, t]$. In other words, the FSB scheduler balances the service received $W_i$ around the fair share of each flow of the total service $r \cdot t$.

For that purpose, credit counters $C_i$ are used that keep track of the time elapsed in discrete steps after each packet transmission. In order to be independent of the overall device output rate $r$, the packet size $L$, which is proportional to the elapsed time, is used as a measure for the elapsed time. Consequently, instead of the time $t$, the value $r \cdot t$, which indicates the total number of bytes that can be served in a time period $t$, is tracked. Each time a flow i receives service, the credit counter is reduced by the normalized service $L/w_i$. It is to be noted that the packet size $L$ may vary from packet to packet.

Let $W_i$ be the total service received during the time period $(0, t]$ and flow i becoming active at instant 0, then the credit counter value $C_i$ is represented by $r \cdot t - W_i / w_i$. The value $w_i \cdot C_i$ then reflects the difference between the entitled service based upon the weight of flow i and the service received. In other words, when $C_i > 0$, then flow i is behind the assigned schedule, and when $C_i < 0$, then flow i is ahead of schedule. According to an aspect of the invention, each flow i is considered for receiving service only when it is behind schedule.

The order in which the eligible flows are serviced is based upon the earliest finish time of the front end packets. In case all active flows are ahead of schedule, more capacity is available than minimally assigned to the active flows. To maintain work-conserving, meaning that the scheduler is never idle, whenever there are packets to be transmitted, all credit counters are increased with the same amount such that the highest credit counter equals zero.

Flows that become idle during their busy period are ahead of schedule, i.e. credit values $C_i$ are below zero. The credit values $C_i$ of an idle flow are reset each time a busy period of that particular flow ends or has ended, i.e. the corresponding credit value $C_i$ passes through zero. In other words, the credit value gets reset when a flow has received all the service it is entitled to and has no more packets waiting. Otherwise it could happen that a flow gets an extra credit, which it is not entitled to, according to the allocated bandwidth.

The above description applies to the situation where the sum of all weight factors equals 1, i.e. $W = \sum w_i = 1$. In both cases of over-provisioning and under-provisioning, respectively $W = \sum w_i > 1$ and $W = \sum w_i < 1$, the server output capacity is divided pro rata by the respective weights as well. However, to determine whether a flow is ahead or behind schedule the criterion should now read $(w_i \cdot r \cdot t / \sum w_i) - W_i$. This can be achieved by either tracking the elapsed time using

the value $r \cdot t / \sum w_i$ or by using the normalized service $\sum w_i \cdot L / w_i$ instead of $L/w_i$.

Table 1 shows an embodiment of the FSB algorithm in pseudo code.

## Table 1 Scheduling Algorithm FSB

```
1    Initialization
2        active = 0;
3        for (i = 0; i < flows; i++)
4            credit [i] = 0;
5        end for;
6
7    Enqueuing (invoked when packet p arrives)
8        id = extractFlowId(p);
9        enqueue (p, id);
10       active = active + 1;
11
12   Dequeuing
13       while (true)
14           while (active == 0) ;
15           end while;
16           cmax = -M;
17           for (i = 0; i < flows; i++)
18               if ( queue[i].active && credit[i] >= 0 ) then
19                   size = getSize(head(queue[i]));
20                   c = credit[i] - size/weight[i];
21                   if ( c >= cmax ) then
22                       cmax = c;
23                       packet_size = size;
24                       index=i;
25                   end if;
26               end if;
27           end for;
28           send (dequeue(queue[index]));
29           active = active - 1;
30           if ( active == 0 ) then
31               for (i = 0; i < flows; i++)
```

```
32            credit [i] = 0;
33          end for;
34       Else
35          credit[index] = credit[index] - packet_size/weight[index];
36          for (i = 0; i < flows; i++)
37             credit[i] = credit[i] + packet_size / W;
38             if ( !queue[i].active && credit[i] > 0 ) then
39                credit[i] = 0;
40             end if;
41          end for;
42          cmax = -M;
43          for (i = 0; i < flows; i++)
44             if ( queue[i].active ) then
45                c = credit[i];
46                if ( c >= cmax ) then
47                   cmax = c;
48                end if;
49             end if;
50          end for;
51          if ( cmax < 0 ) then
52             for (i = 0; i < flows; i++)
53                credit[i] = credit[i] - cmax
54                if (!queue[i].active && credit[i] > 0  ) then
55                   credit[i] = 0;
56                end if;
57             end for;
58          end if;
59       end if;
60    end while;
```

The parameters used in table 1 are the following:

| | |
|---|---|
| $r$ | Server output rate, |
| $p_i = w_i\, r$ | Allocated rate to flow i, |
| $w_i = p_i/r,\ w_i \in (0,1]$ | Weight factor associated to flow i, |
| $L_i$ | Maximum packet size of flow i traffic, |
| $L_{MAX}$ | Maximum packet size over all flows, |
| $M = L_{MAX}/\min\{w_i\}$ | Maximum normalized packet size, |
| $W = \sum w_\iota$ | Sum of all weight factors, |

The Table 1 shows the basic FSB algorithm in pseudo-code. It contains three parts:

- Initialization
- En-queuing process
- De-queuing process

The Initialization part is called, when the scheduler is first started. It is used to set:

- an activity counter (line 2) that tracks, whether or not there are packets queued in the respective flow.
- a per flow credit counter $C_i$ (lines 3 - 5).

The En-queuing part is called, whenever a packet arrives in the network device. First the flow *id* must be extracted from the packet header (line 8). The *id* is extracted by means of classification using a combination of packet header fields like e.g. MAC address, VLAN tag, IP tuple, or the input port the packet arrives upon. The next step is to enqueue the packet using the queue that corresponds with the extracted flow *id* (line 9). Whenever a packet is queued the activity counter is incremented by one (line 10).

The De-queuing routine is the heart of the scheduling algorithm and starts by checking if there are flows that have packets waiting to be served (lines 14-15). If there are no packets waiting then the scheduler is idle (work conserving). If there are packets queued, the scheduler starts determining among all active flows with non-negative credit value the flow *i* that has the highest credit counter value minus the service requested (lines 16-27). In other words, a value expressing a relation between the already received service, represented by the credit value $C_i$, and the requested service, represented by $L/w_i$, , where the packet length $L$ may be different for each flow *i*, is determined. The actual finish time for a flow i is proportional to $L/w_i$. When the active flow with the highest value is found, the variables *index* and *packet size* will have the right values (lines 23, 24).

The next step is to actually send the front-end packet from the queue with the corresponding index value (line 28). During transmission of the selected packet, the algorithm will decrement the activity counter (line 29). In case the scheduler returns idle, all credit counters are reset to zero (lines 30-33). If there are still packets waiting, all credit counters are updated before the next packet is selected to receive service (lines 34-59). First, the credit counter of the currently serviced flow is updated by subtracting the requested service *(packet_size/weight)* at line 35.

Next, all credit counters are increased by the size of the packet currently being served divided by the sum of all weights (line 37) and upper bounded by zero when a flow is idle at the finish time of the current packet transmission (lines 38-40). Finally, a check is performed to see whether all active flows are ahead or behind their requested service (lines 42-50). When under-provisioning conditions apply, i.e. the sum of all the weights of the active flows is smaller than $W$, *cmax* will eventually become negative. The shown correction by -*cmax* (lines 51-58) prevents the server from becoming inactive.

It can be shown, that in the case of $W$ equal to one, i.e. in the case there is not over or under-provisioning, the Golestani fairness is bound by 2$M$, while the Benet-Zhang fairness, or the Worst-case Fair index (WFI), is bound by

$$L_{MAX}/r - L_i/r + L_i/\rho_i.$$

The overall latency is bound by

$$L_i/\rho_i + L_{MAX}/r,$$

and the computational complexity is $O(1)$. In case $W \neq 1$, the above properties still hold, but the relative weights $w_i$ need to be replaced by $w_i / W$ and the allocated rates $p_i$ need to be replaced by $p_i / W$.

All in all, the proposed FSB scheduler has an optimized performance on all accounts, i.e. best-in-class fairness (Golestani and WFI), latency, and complexity. It has the ability to cope with over- and under-provisioning and it is suitable to be used in hierarchical service allocation. The credit values of the incoming flows are bound by design between $-M$ and $M$.

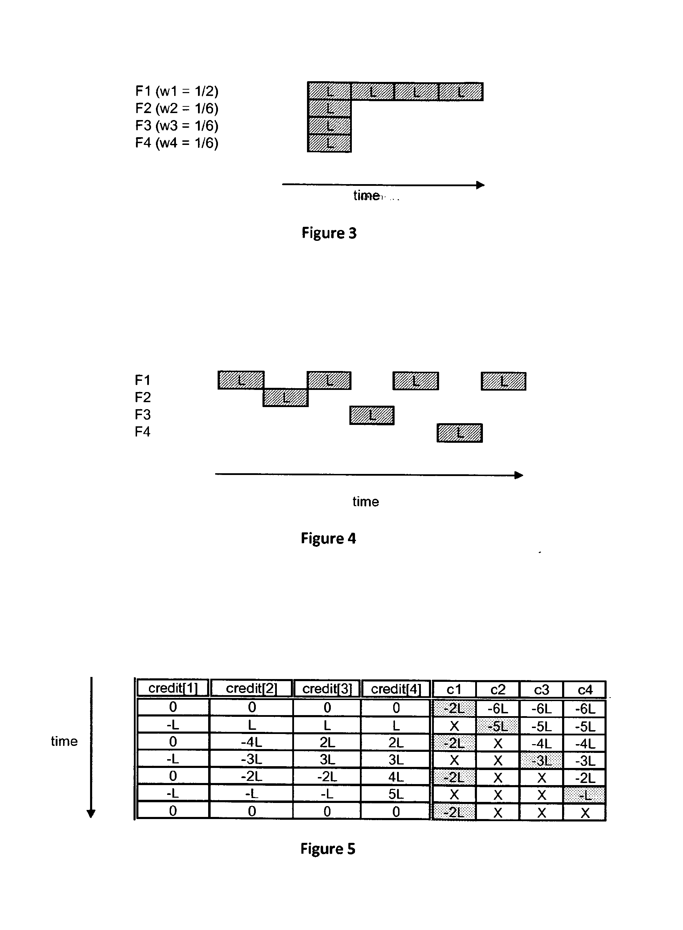

Figure 3 shows an example for illustrating a plurality of incoming flows F1 to F4, where F1 sends four back-to-back packets of length $L$ at time 0, which each of the other flows F2 to F4 sends only one packet at time 0. The weights of the flows are $w_1$ = 1/2 and $w_2, w_3, w_4$ = 1/6. When scheduling an output flow from these four incoming flows using the FSB scheduler, the incoming flows receive service as shown in Fig. 4. First F1 can send one packet, then F2 can send its packet. Next F1 can send another packet, then F3 can send its packet, and so on. This service order differs from prior art frame based schedulers.

In order to better visualize the pseudo code algorithm of the FSB scheduler shown in Table 1, Figure 5 illustrates the evolution of the parameters, notably the credit values (credit[$i$]) and the auxiliary credit values c (c1,..,c4), for the exemplary flows shown in Figure 3. Initially all credit values (credit[$i$]) are zero and the auxiliary credit values c are determined as c = credit[$i$] - $L/w_i$. As c1 is the biggest value, flow F1 will be serviced, as indicated by the grey shading of the box. The credit values credit[$i$] are updated, leaving flow F1 with a negative credit value. Consequently flow F1 is not considered for the next round and marked as inactive, indicated in the table by an "X". Again the auxiliary credits c for all active flows are calculated and flow F2 is selected to be serviced next. The update of the credit values leaves F2 with a negative credit value and it is therefore excluded in the next round. F1, on the other hand, is reconsidered, as its updated credit value is back to 0, i.e. non-negative. In a similar manner, the algorithm proceeds, until no more incoming packets are waiting to be scheduled.

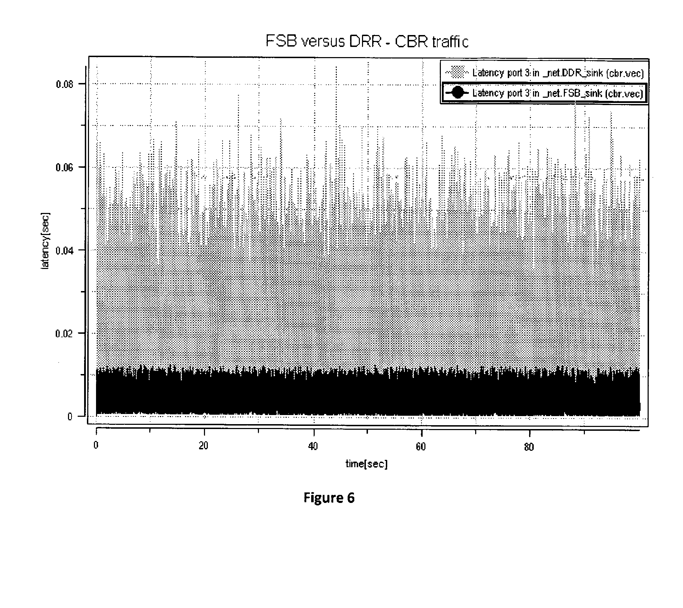

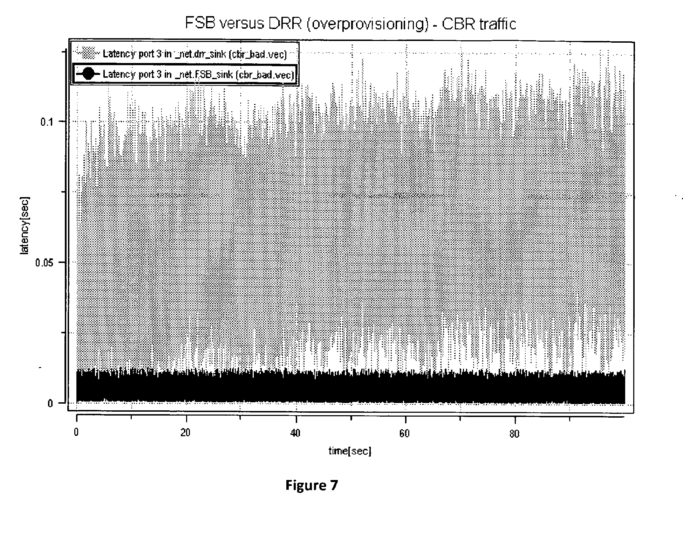

Figures 6 and 7 show simulations of the latency performance of the FSB scheduler compared with a Deficit Round Robin (DRR) scheduler. Constant Bit Rate (CBR) traffic is used and the latency is measured on an exemplary port (i.e. flow) 3. As can be seen in Fig. 6, the FSB scheduler (black graph) systematically leads to lower latency values at a maximum of 0.01 seconds, while the DRR scheduler (grey graph) leads to latency values up to 0.08 seconds. In case of over-provisioning of the scheduler (Fig. 7), it can furthermore be observed, that the latency performance of the DRR scheduler deteriorates over time, due to the building up of a traffic backlog. The FSB scheduler, on the other hand, shows a stable performance.

Consequently, the FSB scheduler is a low complexity algorithm with characteristics that approach that of the best known timestamp scheduler algorithms like the WF$^2$Q. Because of the low complexity of the FSB algorithm, it becomes feasible to implement this type of scheduler in high-speed network devices operating at 1 Gigabit and above. No complex calculations have to be performed on the plurality of incoming packets. The calculations are only performed looking at the outgoing packets. This has a certain number of advantages, such as less power dissipation resulting from the reduced complexity. Furthermore, time constraints are relaxed, which is important as the available time to determine what flow to schedule next is limited by the minimum packet size to be supported. Or the other way round, less calculation time offers support for smaller packets or higher bit rates.

It should be noted, that the present invention is not limited to the disclosed exemplary applications; other applications can benefit from the present invention as well. By way of example, the disclosed method and scheduler can be applied to process scheduling used e.g. in computer multitasking.

**Claims**

1. A method for scheduling a flow of data packets (132) on an output link (110) from data packets from a plurality of incoming flows (135) having each an associated weight indicating a relative importance of the respective incoming flow (135), the method comprising the steps:

   determining for each incoming flow (135) a scheduling credit value (145), wherein the scheduling credit value (145) tracks

   - an assigned service of the flow (135), wherein the assigned service depends on the weight of the flow (135) and is proportional to a time reserved for data packets from the flow (135) on the output link (110), reduced by
   - a received service of the flow (135), wherein the received service is proportional to a time that data packets from the flow (135) have been scheduled on the output link (110);

   the method being **characterized in** further comprising the steps:

determining the flow (135) with the highest difference of the scheduling credit value (145) and a requested service, wherein the requested service is proportional to a time required for scheduling a front end data packet (150) of the respective flow (135) on the output link (110);

assigning service to the incoming flow (135) with the highest difference of the scheduling credit value (145) and the requested service; and

updating the scheduling credit value (145) based on the service received by the respective flow (135);

wherein only incoming flows (135) with a non-negative scheduling credit value (145) are considered for scheduling.

2.  The method according to claim 1, whereas the weights of all flows (135) do not add up to one and whereas a flow (135) is considered for scheduling only, if the assigned service of the said flow (135), divided by the sum of the weights of all flows (135), is greater than the service already received by the said flow (135).

3.  The method according to claim 1, whereas the scheduling credit value (145) of an idle flow (135) is reset to zero each time that a busy period of that particular flow (135) ends or has ended.

4.  The method according to claim 1, comprising normalizing the weights for over- and under-provisioning of the services.

5.  The method according to claim 1, whereas service is assigned to the flow (135) that has the highest difference of the scheduling credit value (145) and a term given by the requested service, divided by the sum of the weights of the flows (135).

6.  The method according to claim 1, whereas after each service step all scheduling credit values (145) are increased by the requested service of the flow (135) that service has been assigned to in the previous service step.

7.  The method according to claim 1, whereas at any given time only flows (135) having data packets (150) waiting to be scheduled are considered for scheduling.

8.  A scheduling apparatus for scheduling a flow of data packets (132) on an output link (110) from data packets from a plurality of incoming flows (135) having each an associated weight indicating a relative importance of the respective incoming flow (135), the scheduling apparatus comprising:

    means to determine for each incoming flow (135) a scheduling credit value (145), wherein the scheduling credit value (145) tracks

    - an assigned service of the flow (135), wherein the assigned service depends on the weight of the flow and is proportional to a time reserved for data packets from the flow (135) on the output link (110), reduced by
    - a received service of the flow (135), wherein the received service is proportional to a time that data packets from the flow (135) have been scheduled on the output link (110);

    the scheduling apparatus being **characterized in** further comprising:

    means to determine the flow (135) with the highest difference of the scheduling credit value (145) and a requested service, wherein the requested service is proportional to a time required for scheduling a front end data packet (150) of the respective flow (135) on the output link (110);

    means to assign service to the incoming flow (135) with the highest difference of the scheduling credit value (145) and the requested service; and

    means to update the scheduling credit value (145) based on the service received by the respective flow (135); wherein only incoming flows (135) with a non-negative scheduling credit value (145) are considered for scheduling.

**Patentansprüche**

1.  Verfahren zum Planen eines Flusses von Datenpaketen (132) auf einem Ausgangs-Link (110) von Datenpaketen aus einer Mehrzahl von eingehenden Flüssen (135) mit jeweils einem assoziierten Gewicht, welches ein relatives Volumen des jeweiligen eingehenden Flusses (135) angibt, wobei das Verfahren die folgenden Schritte umfasst:

Bestimmen, für jeden eingehenden Fluss (135), eines Planungsguthabenwerts (145),
wobei der Planungsguthabenwert (145) nachverfolgt:

- Einen zugewiesenen Dienst des Flusses (135), wobei der zugewiesene Dienst von dem Gewicht des Flusses (135) abhängt und proportional zu einer für die Datenpakete des Flusses (135) auf dem Ausgangs-Link (110) reservierten Zeit ist, reduziert um
- einen empfangenen Dienst des Flusses (135), wobei der empfangene Dienst proportional zu einem Zeitpunkt ist, zu welchem Datenpakete des Flusses (135) auf dem Ausgangs-Link (110) geplant wurden;

wobei das Verfahren **dadurch gekennzeichnet ist, dass** es weiterhin die folgenden Schritte umfasst:

Ermitteln des Flusses (135) mit der größten Differenz zwischen dem Planungsguthabenwert (145) und einem angeforderten Dienst, wobei der angeforderte Dienst proportional zu einer für die Planung eines Front-End-Datenpakets (150) des jeweiligen Flusses (135) auf dem Ausgangs-Link (110) ist;
Zuweisen des Dienstes an den eingehenden Fluss (135) mit der größten Differenz zwischen dem Planungsguthabenwert (145) und dem angeforderten Dienst; und
Aktualisieren des Planungsguthabenwerts (145) auf der Basis des von dem entsprechenden Fluss (135) empfangenen Dienstes;
wobei nur eingehende Flüsse (135) mit einem nicht negativen Planungsguthabenwert (145) für die Planung berücksichtigt werden.

2. Das Verfahren nach Anspruch 1, wobei sich die Gewichte aller Flüsse (135) nicht zu eins addieren, und wobei ein Fluss (135) nur für die Planung berücksichtigt wird, wenn der zugewiesene Dienst des besagten Flusses (135), geteilt durch die Summe der Gewichte aller Flüsse (135), größer ist als der bereits durch den besagten Fluss (135) empfangene Dienst ist.

3. Das Verfahren nach Anspruch 1, wobei der Planungsguthabenwert (145) eines leeren Flusses (135) jedes Mal auf Null zurückgesetzt wird, wenn eine Hochverkehrszeit dieses bestimmten Flusses (135) endet oder beendet wurde.

4. Das Verfahren nach Anspruch 1, umfassend das Normalisieren der Gewichte für die Über- oder Unterbereitstellung der Dienste.

5. Das Verfahren nach Anspruch 1, wobei der Dienst demjenigen Fluss (135) zugewiesen wird, welcher die höchste Differenz zwischen dem Planungsguthabenwert (145) und einer von dem angeforderten Dienst gegebenen Frist, geteilt durch die Summe der Gewichte der Flüsse (135), aufweist.

6. Das Verfahren nach Anspruch 1, wobei im Anschluss an jeden Dienstschritt alle Planungsguthabenwerte (145) um den geforderten Dienst des Flusses (135), welchem dieser Dienst in dem vorherigen Dienstschritt zugewiesen wurde, erhöht werden.

7. Das Verfahren nach Anspruch 1, wobei zu einem gegebenen Zeitpunkt nur Flüsse (135) mit Datenpaketen (150), die auf eine Planung warten, für die Planung berücksichtigt werden.

8. Planungsvorrichtung zum Planen eines Flusses von Datenpaketen (132) auf einem Ausgangs-Link (110) aus Datenpaketen einer Mehrzahl von eingehenden Flüssen (135) mit jeweils einem assoziierten Gewicht, welches ein relatives Volumen des jeweiligen eingehenden Flusses (135) angibt, wobei die Planungsvorrichtung umfasst:

Mittel zum Bestimmen, für jeden eingehenden Fluss (135), eines Planungsguthabenwerts (145), wobei der Planungsguthabenwert (145) nachverfolgt:

- Einen zugewiesenen Dienst des Flusses (135), wobei der zugewiesene Dienst von dem Gewicht des Flusses (135) abhängt und proportional zu einer für die Datenpakete des Flusses (135) auf dem Ausgangs-Link (110) reservierten Zeit ist, reduziert um
- einen empfangenen Dienst des Flusses (135), wobei der empfangene Dienst proportional zu einem Zeitpunkt ist, zu welchem Datenpakete des Flusses (135) auf dem Ausgangs-Link (110) geplant wurden;

wobei die Planungsvorrichtung **dadurch gekennzeichnet ist, dass** sie weiterhin umfasst:

Mittel zum Ermitteln des Flusses (135) mit der größten Differenz zwischen dem Planungsguthabenwert (145) und einem angeforderten Dienst, wobei der angeforderte Dienst proportional zu einer für die Planung eines Front-End-Datenpakets (150) des jeweiligen Flusses (135) auf dem Ausgangs-Link (110) ist;

Mittel zum Zuweisen des Dienstes an den eingehenden Fluss (135) mit der größten Differenz zwischen dem Planungsguthabenwert (145) und dem angeforderten Dienst; und

Mittel zum Aktualisieren des Planungsguthabenwerts (145) auf der Basis des von dem entsprechenden Fluss (135) empfangenen Dienstes;

wobei nur eingehende Flüsse (135) mit einem nicht negativen Planungsguthabenwert (145) für die Planung berücksichtigt werden.

## Revendications

1. Procédé pour ordonnancer un flux de paquets de données (132) sur une liaison de sortie (110) à partir des paquets de données provenant d'une pluralité de flux entrants (135) ayant chacun un poids associé indiquant une importance relative du flux entrant (135) correspondant, le procédé comprenant les étapes suivantes :

   détermination, pour chaque flux entrant (135), d'une valeur de crédit d'ordonnancement (145), la valeur de crédit d'ordonnancement (145) suivant

   - un service assigné du flux (135), le service assigné dépendant du poids du flux (135) et étant proportionnel à un temps réservé aux paquets de données provenant du flux (135) sur la liaison de sortie (110), réduit par
   - un service reçu du flux (135), le service reçu étant proportionnel à un temps pour lequel les paquets de données provenant du flux (135) ont été ordonnancés sur la liaison de sortie (110) ;

   ledit procédé étant **caractérisé en ce qu'**il comprend en outre les étapes suivantes :

   détermination du flux (135) ayant la différence la plus élevée de la valeur de crédit d'ordonnancement (145) et d'un service demandé, le service demandé étant proportionnel à un temps nécessaire pour ordonnancer un paquet de données frontal (150) du flux correspondant (135) sur la liaison de sortie (110) ;

   affectation du service au flux entrant (135) ayant la différence la plus élevée dans la valeur de crédit d'ordonnancement (145) et le service demandé ; et

   mise à jour de la valeur de crédit d'ordonnancement (145) en se basant sur le service reçu par le flux correspondant (135) ;

   seuls les flux entrants (135) ayant une valeur de crédit d'ordonnancement non négative (145) étant pris en considération pour l'ordonnancement.

2. Procédé selon la revendication 1, les poids de tous les flux (135) ne s'additionnant pas et un flux (135) étant uniquement pris en considération pour l'ordonnancement si le service affecté dudit flux (135), divisé par la somme des poids de tous les flux (135), est supérieur au service déjà reçu par ledit flux (135).

3. Procédé selon la revendication 1, la valeur de crédit d'ordonnancement (145) d'un flux au repos (135) étant remise à zéro à chaque fois qu'une période d'occupation de ce flux particulier (135) se termine ou a pris fin.

4. Procédé selon la revendication 1, comprenant la normalisation des poids pour le sur- et le sous-approvisionnement des services.

5. Procédé selon la revendication 1, le service étant affecté au flux (135) ayant la différence la plus élevée de la valeur de crédit d'ordonnancement (145) et un terme donné par le service demandé, divisé par la somme des poids des flux (135).

6. Procédé selon la revendication 1, toutes les valeurs de crédit d'ordonnancement (145) étant incrémentées après chaque étape du service du service demandé du flux (135) auquel ce service a été affecté dans l'étape précédente du service.

7. Procédé selon la revendication 1, seuls les flux (135) ayant des paquets de données (150) en attente d'ordonnancement étant pris en considération pour l'ordonnancement à tout moment donné.

8. Appareil d'ordonnancement pour ordonnancer un flux de paquets de données (132) sur une liaison de sortie (110) à partir des paquets de données provenant d'une pluralité de flux entrants (135) ayant chacun un poids associé indiquant une importance relative du flux entrant (135) correspondant, l'appareil d'ordonnancement comprenant :

moyens pour déterminer pour chaque flux entrant (135) une valeur de crédit d'ordonnancement (145), la valeur de crédit d'ordonnancement (145) suivant

- un service assigné du flux (135), le service assigné dépendant du poids du flux et étant proportionnel à un temps réservé aux paquets de données provenant du flux (135) sur la liaison de sortie (110), réduit par
- un service reçu du flux (135), le service reçu étant proportionnel à un temps pour lequel les paquets de données provenant du flux (135) ont été ordonnancés sur la liaison de sortie (110) ;

l'appareil d'ordonnancement étant **caractérisé en ce qu'**il comprend en outre :

moyens pour déterminer le flux (135) ayant la différence la plus élevée de la valeur de crédit d'ordonnancement (145) et un service demandé, le service demandé étant proportionnel à un temps nécessaire pour ordonnancer un paquet de données frontal (150) du flux (135) correspondant sur la liaison de sortie (110) ;
moyens pour affecter le service au flux entrant (135) ayant la différence la plus élevée de la valeur de crédit d'ordonnancement (145) et du service demandé ; et
moyens pour mettre à jour la valeur de crédit d'ordonnancement (145) en se basant sur le service reçu par le flux (135) correspondant ;
seuls les flux entrants (135) ayant une valeur de crédit d'ordonnancement non négative (145) étant pris en considération pour l'ordonnancement.

# FIGURE 1

SCHEDULER 105
SCHEDULER LOGIC 105a
QUEUE MANAGER 160
FLOW CONTROLLER 165
QUANTIFICATION CONTROLLER 170

FIRST FLOW 135 (1)
FIRST PACKET QUEUE 140(1)
FIRST 145 (1)
FIRST CREDIT COUNTER 150(1)

SECOND FLOW 135 (2)
SECOND PACKET QUEUE 140(2)
SECOND 145 (2)
SECOND CREDIT COUNTER 150(2)

THIRD FLOW 135 (3)
THIRD PACKET QUEUE 140(3)
THIRD 145 (3)
THIRD CREDIT COUNTER 150(3)

OUTGOING PACKET 132
OUTPUT LINK 110
NETWORK DEVICE (e.g., Packet ROUTER) 115
TRANSCEIVER 130
INPUT PORTS 122(1) 122(N)
INCOMING PACKET TRAFFIC 107
DATA NETWORK (e.g., Internet) 120
100

**(21)**

Initialize Credit Values $C_i$ for all flows $i$.

**(22)**

Determine Finish Times of the Front End Packets of all active flows with a positive credit value $C_i$.

**(23)**

Select flow with earliest finish time.

**(24)**

Forward the front end packet of the selected flow and reduce its credit value $C_i$ by the service received (i.e. by the length of the forwarded packet).

**(25)**
Active flows with $C_i > 0$.

Yes

No

**(26)**

Mark up credit values $C_i$

## Figure 2

F1 (w1 = 1/2)
F2 (w2 = 1/6)
F3 (w3 = 1/6)
F4 (w4 = 1/6)

time

**Figure 3**

F1
F2
F3
F4

time

**Figure 4**

time

| credit[1] | credit[2] | credit[3] | credit[4] | c1 | c2 | c3 | c4 |
|-----------|-----------|-----------|-----------|------|------|------|------|
| 0 | 0 | 0 | 0 | -2L | -6L | -6L | -6L |
| -L | L | L | L | X | -5L | -5L | -5L |
| 0 | -4L | 2L | 2L | -2L | X | -4L | -4L |
| -L | -3L | 3L | 3L | X | X | -3L | -3L |
| 0 | -2L | -2L | 4L | -2L | X | X | -2L |
| -L | -L | -L | 5L | X | X | X | -L |
| 0 | 0 | 0 | 0 | -2L | X | X | X |

**Figure 5**

16

Figure 6

**Figure 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070121504 A

**Non-patent literature cited in the description**

- **Deng Pan et al.** Credit based fair scheduling for packet switched networks. *INFOCOM,* 13 March 2005, 843-854